# EUROPÄISCHE PATENTANMELDUNG

(11) **EP 3 771 156 A1**
(43) Veröffentlichungstag der Anmeldung: **27.01.2021**
(21) Anmeldenummer: 20187642.2
(22) Anmeldetag: 24.07.2020
(51) Int. Cl.: H04L 12/28, H04W 12/00, H04W 88/10, H04L 29/06

(54) **GEBÄUDESEITIG INSTALLIERBARE VORRICHTUNG ZUR HEIM- UND/ODER GEBÄUDEAUTOMATISIERUNG UND VERFAHREN**

(30) Priorität: 24.07.2019 DE 102019120015
(71) Anmelder: Minol Messtechnik W. Lehmann GmbH & Co. KG, 70771 Leinfelden-Echterdingen (DE)
(72) Erfinder: Ritter, Hartmut, 70182 Stuttgart (DE)
(74) Vertreter: DREISS Patentanwälte PartG mbB

(57) **Zusammenfassung**

Es wird ein Verfahren zum Betreiben gebäudeseitig installierbare Vorrichtung (100) zur Heim- und/oder Gebäudeautomatisierung bereitgestellt, wobei das Verfahren umfasst: Bereitstellen einer ersten Funktion (114), um mittels wenigstens einer ersten Schnittstelle (102) empfangene erste Daten (D1) über wenigstens eine Backhaul-Schnittstelle (110) zu versenden.

## Beschreibung

Die Erfindung betrifft eine gebäudeseitig installierbare Vorrichtung zur Heim- und/oder Gebäudeautomatisierung sowie ein Verfahren zum Betreiben der Vorrichtung.

Es ist bekannt, dass zur Heim- und Gebäudeautomatisierung verschiedene Funkkommunikations-Standards existieren.

Die Probleme des Standes der Technik werden durch eine Vorrichtung gemäß dem Anspruch 1 und durch ein Verfahren gemäß einem nebengeordneten Anspruch gelöst.

Gemäß einem ersten Aspekt dieser Beschreibung wird eine gebäudeseitig installierbare Vorrichtung zur Heim- und/oder Gebäudeautomatisierung bereitgestellt, wobei die Vorrichtung wenigstens einen Speicher mit Computerprogrammcode, wenigstens einen Prozessor, wenigstens eine erste Schnittstelle für ein Weitverkehrsfunknetz und eine wenigstens eine Backhaul-Schnittstelle für ein Backhaul-Netzwerk umfasst, wobei der Computerprogrammcode so konfiguriert ist, dass er mit dem wenigstens einen Prozessor, der wenigstens einen ersten Schnittstelle und der wenigstens einen Backhaul-Schnittstelle bewirkt, dass die Vorrichtung eine erste Funktion bereitstellt, um mittels der ersten Schnittstelle empfangene erste Daten über die wenigstens eine Backhaul-Schnittstelle zu versenden.

Ein vorteilhaftes Beispiel zeichnet sich dadurch aus, dass die Vorrichtung mindestens eine zweite Schnittstelle für ein Nahverkehrsfunknetz umfasst, wobei der Computerprogrammcode so konfiguriert ist, dass er mit dem wenigstens einen Prozessor, der wenigstens einen ersten Schnittstelle, der wenigstens einen zweiten Schnittstelle und der wenigstens einen Backhaul-Schnittstelle bewirkt, dass die Vorrichtung eine zweite Funktion bereitstellt, um mittels der wenigstens einen zweiten Schnittstelle zweite Daten zu empfangen und dritte Daten in Abhängigkeit von den empfangenen zweiten Daten über die wenigstens eine zweite Schnittstelle zu versenden.

Durch die Integration der ersten und der zweiten Funktion wird die Heim- und Gebäudeautomatisierung mit einer Auslesung von Zählerständen von beispielsweise Heizkosten- und Wasserzählern sowie Rauchmelder-Alarmierungen über das Weitverkehrsfunknetz verbunden. Durch die erste Funktion können vorteilhaft auch Informationen hausfremder Endgeräte ausgelesen und weitergeleitet werden. Die zweite Funktion hingegen sammelt Daten der hauseigenen Endgeräte.

Ein vorteilhaftes Beispiel zeichnet sich dadurch aus, dass die Vorrichtung eine dritte Funktion bereitstellt, um ein Überwachungsergebnis in Abhängigkeit von den ersten über die erste Schnittstelle empfangenen Daten und in Abhängigkeit von den zweiten mittels der zweiten Schnittstelle empfangenen Daten zu ermitteln.

Vorteilhaft ermöglicht das Überwachungsergebnis die vorrichtungsseitige Verknüpfung von Informationen, welche aus dem Nahverkehrsfunknetz als auch aus dem Weitverkehrsfunknetz stammen. Mit dem Überwachungsergebnis lassen sich weitere Aktionen auslösen oder Warnungen ausgeben. Folglich wird die Hausautomatisierung unabhängig von der Verfügbarkeit des Backhaul-Netzwerks. Damit wird es möglich, dass die Vorrichtung autark Entscheidungen oder Warnungen generieren kann.

Ein vorteilhaftes Beispiel zeichnet sich dadurch aus, dass die Vorrichtung die ersten Daten in verschlüsselter Form mittels der wenigstens einen ersten Schnittstelle empfängt, die verschlüsselten Daten in einem ersten Speicherbereich bereitstellt, wobei die Zugriffsrechte auf den ersten Speicherbereich so ausgestaltet sind, dass der erste Speicherbereich nur ausgehend von der ersten Schnittstelle beschreibbar ist, wenigstens einen Teil der Mehrzahl der bereitgestellten ersten Daten in Abhängigkeit von einem zugeordneten in einem zweiten Speicherbereich hinterlegten Schlüssel entschlüsselt und in einem dritten Speicherbereich bereitstellt.

Vorteilhaft werden die ersten Daten für die Verwender bzw. Nutzer der Vorrichtung freigegeben und können vom Verwender der Vorrichtung eingesehen bzw. zur Einsichtnahme bereitgestellt werden. Auf der anderen Seite werden die weiterhin verschlüsselten ersten Daten nicht entschlüsselt, da diese von Endgeräten stammen, welche nicht mit der Vorrichtung gepaart sind bzw. für die keine Schlüssel auf der Vorrichtung abgespeichert sind.

Ein vorteilhaftes Beispiel zeichnet sich dadurch aus, dass die Vorrichtung das Überwachungsergebnis mittels der Backhaul-Schnittstelle und/oder einer weiteren Schnittstelle für ein Nahverkehrsfunknetz versendet.

So ist es möglich, dass das Überwachungsergebnis an sein Ziel beispielweise einen Anwendungsserver gelangt und so beispielsweise eine entfernt angeordnete Hausüberwachung durch die Vorrichtung ermöglicht wird.

Ein vorteilhaftes Beispiel zeichnet sich dadurch aus, dass die Vorrichtung eine Anzahl von miteinander verbindbaren Modulen umfasst, wobei ein erstes der Module die wenigstens eine erste Schnittstelle und die wenigstens eine Backhaul-Schnittstelle umfasst, und wobei ein zweites der Module die wenigstens eine zweite Schnittstelle umfasst.

Durch die bereitgestellte Vereinzelung der Module wird es möglich, dass der Verwender die von ihm benötigten zweiten Module mit der gewünschten Funktion beispielsweise einer gewünschten Nahverkehrsfunknetzunterstützung zukauft. Dadurch wird es für den Verwender möglich, flexibel die von ihm benötigten Module zuzukaufen.

Ein vorteilhaftes Beispiel zeichnet sich dadurch aus, dass die Vorrichtung eine Anzahl von miteinander verbindbaren Modulen umfasst, wobei ein erstes der Module die wenigstens eine zweite Schnittstelle und die wenigstens eine Backhaul-Schnittstelle umfasst, und wobei ein zweites der Module die wenigstens eine erste Schnittstelle umfasst.

Ein vorteilhaftes Beispiel zeichnet sich dadurch aus, dass das erste der Module eine erste Modulschnittstelle aufweist, welche mit einer zweiten Modulschnittstelle des zweiten der Module mechanisch und elektrisch verbindbar ist.

Die Modulschnittstellen erlauben somit eine wunschgemäße Kombination der zukaufbaren Module.

Ein vorteilhaftes Beispiel zeichnet sich dadurch aus, dass das Weitverkehrsfunknetz ein Netzwerk gemäß dem LoRaWAN-Standard ist, und wobei die erste Schnittstelle eine LoRaWAN-Schnittstelle ist.

Vorteilhaft nimmt die Vorrichtung an einem LoRaWAN-Netzwerk teil.

Ein vorteilhaftes Beispiel zeichnet sich dadurch aus, dass das Nahverkehrsfunknetz ein Netzwerk gemäß dem ZigBee-Standard oder gemäß dem EnOcean-Standard oder gemäß dem Z-Wave-Standard ist, und wobei die zweite Schnittstelle eine ZigBee-Schnittstelle oder eine EnOcean-Schnittstelle oder eine Z-Wave-Schnittstelle ist.

Vorteilhaft stellt die wenigstens eine zweite Schnittstelle einen Zugang zu Smart-Home-Endgeräten bereit, um deren Zustand auszulesen und um deren Zustand zu bestimmen.

Ein vorteilhaftes Beispiel zeichnet sich dadurch aus, dass die Vorrichtung wenigstens ein erstes Modul mit der ersten Schnittstelle und der Backhaul-Schnittstelle umfasst. Vorteilhaft wird damit ein Basismodul im Sinne des ersten Moduls bereitgestellt, welches die erste Schnittstelle und die Backhaul-Schnittstelle integriert und damit eine Vernetzungsmöglichkeit zwischen beiden Schnittstellen schafft. So können auf einfache Art und Weise Daten, insbesondere Zählerdaten, von der ersten Schnittstelle empfangen werden, um über die Backhaul-Schnittstelle und einen entfernt angeordneten Access Point diese Daten an eine entfernt angeordnete zentrale Verarbeitungseinheit weiterzuleiten. Dort können die Daten prozessiert werden. Insbesondere wird auf diese Art und Weise ein System zur automatisierten Zählerabrechnung bereitgestellt.

Ein vorteilhaftes Beispiel zeichnet sich dadurch aus, dass die Vorrichtung wenigstens ein zweites Modul mit der zweiten Schnittstelle umfasst. Damit wird die vorgenannte Funktionalität des ersten Moduls erweitert und Smart-Home-Funktionalitäten können genutzt werden.

Ein vorteilhaftes Beispiel zeichnet sich dadurch aus, dass das erste und das zweite Modul mittels jeweiliger Koppelschnittstellen lösbar miteinander verbindbar sind.

Vorteilhaft ist die jeweilige Koppelschnittstelle in ein jeweiliges Gehäuse des ersten bzw. zweiten Moduls integriert. Damit ergibt sich eine kompakte Ausführung der Vorrichtung und eine bessere Handhabbarkeit für den Endkunden.

Vorteilhaft umfasst das erste Modul einen Niederspannungsstecker zur Energieversorgung der Vorrichtung. Damit kann das erste Modul unmittelbar in eine vorhandene Steckdose eingesteckt werden und die Steckdose trägt das erste Modul.

Vorteilhaft ist der Niederspannungsstecker in ein Gehäuse des ersten Moduls integriert, womit eine kompakte und einfach handhabbare Vorrichtung bereitgestellt wird.

Ein zweiter Aspekt dieser Beschreibung betrifft ein Verfahren zum Betreiben gebäudeseitig installierbare Vorrichtung zur Heim- und/oder Gebäudeautomatisierung, wobei das Verfahren umfasst: Bereitstellen einer ersten Funktion, um mittels der ersten Schnittstelle empfangene erste Daten über die wenigstens eine Backhaul-Schnittstelle zu versenden.

### In den Figuren zeigen:

- Figuren 1, 2 und 3: jeweils eine schematische Darstellung einer Vorrichtung zur Heim- und/oder Gebäudeautomatisierung;
- Figuren 4 und 5: jeweils ein schematisch dargestelltes Anwendungsbeispiel der Vorrichtung;
- Figuren 6 und 7: jeweils eine modulare Bauweise der Vorrichtung in schematischer Form; und
- Figur 8: eine schematische perspektivische Sicht auf ein Beispiel der Vorrichtung.

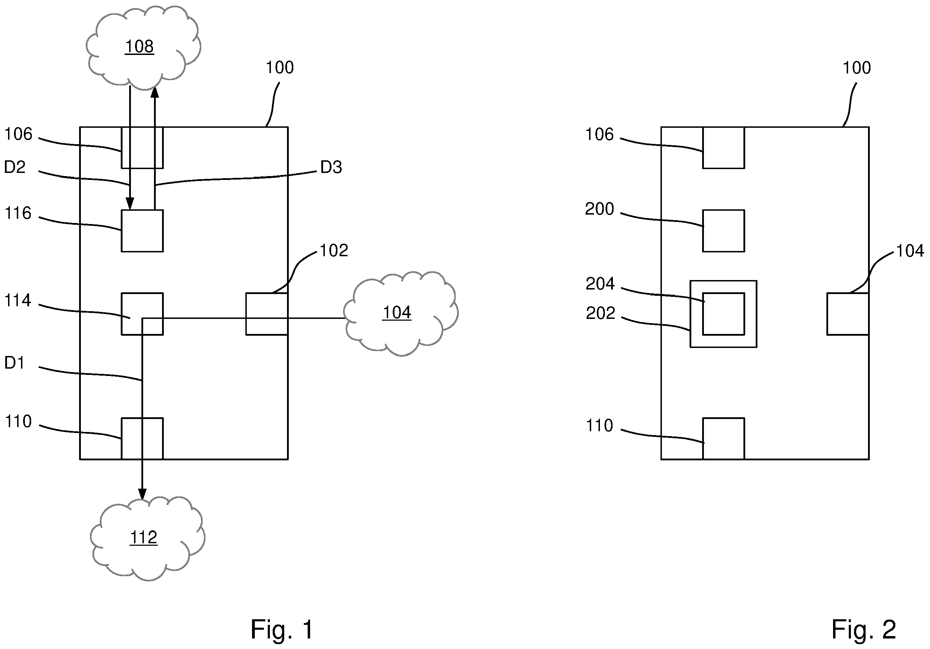

Figur 1 zeigt eine schematische Darstellung einer Vorrichtung 100 zur Heim- und/oder Gebäudeautomatisierung. Über eine erste Schnittstelle 102 kommuniziert die Vorrichtung 100 mit Endgeräten oder anderen Netzwerkeinheiten eines Weitverkehrsfunknetzes 104. Über eine zweite Schnittstelle 106 kommuniziert die Vorrichtung 100 mit einem Endgerät oder einem anderen Netzwerkeinheit eines Nahverkehrsfunknetzes 108. Über eine Backhaul-Schnittstelle 110 kommuniziert die Vorrichtung 100 mit Netzwerkeinheiten eines Backhaul-Netzwerks 112. Bei dem Weitverkehrsfunknetz 104 handelt es sich beispielsweise um ein LoRaWAN-Netzwerk gemäß dem LoRaWAN-Standard 1.0, 1.1 oder einer höheren Version. Bei dem Nahverkehrsfunknetz 108 handelt es sich beispielsweise um ein Netzwerk gemäß dem ZigBee-Standard 3.0 oder höher oder gemäß dem EnOcean-Standard gemäß ISO/IEC 14543-3-10 (Information technology - Home Electronic Systems (HES) - Part 3-10: Wireless Short-Packet (WSP) protocol optimized for energy harvesting - Architecture and lower layer protocols) oder höher oder gemäß dem Z-Wave-Standard oder gemäß dem Z-Wave-Plus-Standard.

Das Backhaul-Netzwerk 112 stellt beispielsweise eine Internetverbindung dar, welche über einen drahtgebundenen Hausanschluss oder aber über eine zellgestützte Mobilfunkschnittstelle geleitet wird. Mithin stellt die Backhaul-Schnittstelle 110 beispielsweise eine drahtgebundene Schnittstelle oder eine drahtlose Schnittstelle dar. Weitergehend kann es sich hierbei also um eine WLAN-Schnittstelle handeln, über welche wiederum die drahtgebundene Hausanschlussschnittstelle erreicht wird.

Eine erste Funktion 114 ist so eingerichtet, dass mittels der ersten Schnittstelle 102 empfangene erste Daten D1 über die wenigstens eine Backhaul-Schnittstelle 110 versendet werden.

Eine zweite Funktion 116 ist derart eingerichtet, dass mittels der zweiten Schnittstelle 106 empfangene Daten D2 empfangen werden und in Abhängigkeit von den zweiten empfangenen Daten dritte Daten D3 über die zweite Schnittstelle 106 versendet werden. Beispielsweise sendet ein Lichtschalter gemäß den zweiten Daten ein Einschaltsignal, welches in Form der dritten Daten an eine Lampe weitergeleitet wird, um die Lampe einzuschalten.

LoRaWAN-Netzwerke sind in einer Stern-Topologie aufgebaut, in der die Vorrichtung 100 Nachrichten zwischen Endgeräten und einem zentralen LoRa-Netzwerkserver weiterleitet. In diesem Beispiel ist die Vorrichtung 100 als LoRa-Gateway ausgebildet. Der LoRa-Netzwerkserver leitet die ersten Daten von jedem Gerät des Netzwerks an einen zugehörigen Anwendungsserver weiter, um beispielsweise eine Heizkostenabrechnung durchzuführen.

In einem weiteren Beispiel ist die Vorrichtung 100 zusätzlich als LoRa-Netzwerkserver ausgebildet. Mithin leitet die Vorrichtung 100 die ersten Daten an den zugehörigen Anwendungsserver weiter.

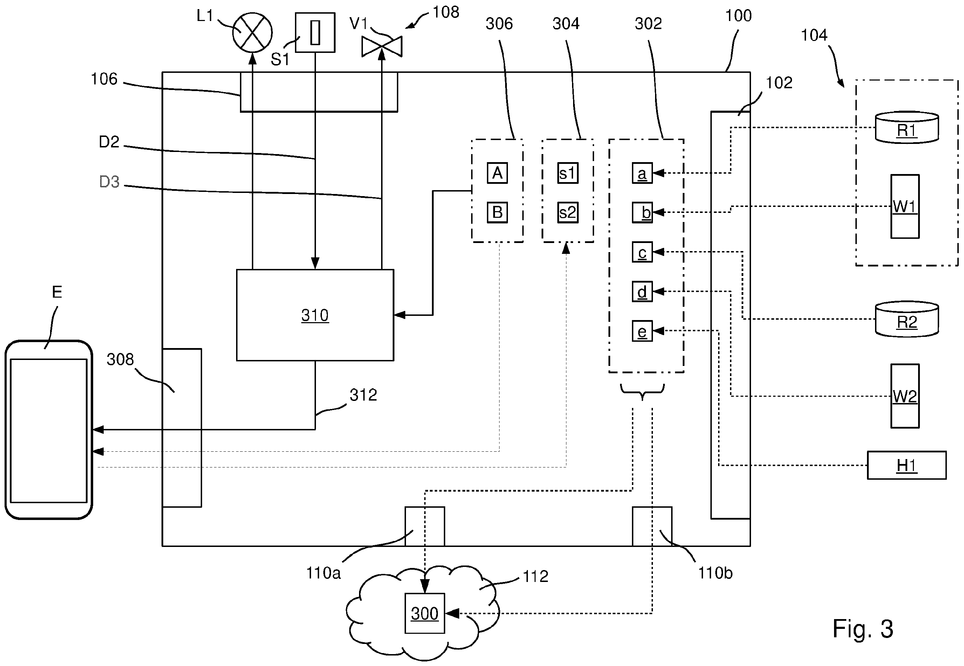

Zur Sicherung der Funkübertragung setzt das LoRaWAN-Protokoll auf symmetrische Kryptographie mit Sitzungsschlüsseln, die aus den Root-Keys des jeweiligen Endgeräts abgeleitet sind. Im Backend - beispielsweise der Vorrichtung 100 - werden die Speicherung der Root-Keys des Geräts und die damit verbundenen Schlüsselableitungen durch einen Join-Server gesichert. Alternativ oder zusätzlich werden Maßnahmen in Verbindung mit Figur 3 vorgeschlagen.

Die Vorrichtung 100 wird beispielsweise über eine gesicherte IP-Verbindung mit einem LoRa-Netzwerkserver oder dem Anwendungsserver im Backhaul-Netzwerk verbunden, während Endgeräte eine Single-Hop-LoRa- oder FSK-Kommunikation (FSK: Frequency Shift Keying) zu der Vorrichtung 100 verwenden. Die gesamte Kommunikation ist im Allgemeinen bidirektional, obwohl erwartet wird, dass die Uplink-Kommunikation von einem Endgerät zum Netzwerkserver der vorherrschende Verkehr ist. Die Kommunikation zwischen Endgeräten und der Vorrichtung 100 ist auf verschiedene Frequenzkanäle und Datenraten verteilt. Die Wahl der Datenrate ist ein Kompromiss zwischen Kommunikationsreichweite und Nachrichtendauer, Kommunikation mit unterschiedlichen Datenraten stört sich nicht gegenseitig. Die LoRa-Datenraten liegen zwischen 0,3 kbps und 50 kbps. Um sowohl die Akkulaufzeit der Endgeräte als auch die Gesamtnetzkapazität zu maximieren, kann die LoRa-Netzwerkinfrastruktur die Datenrate und den HF-Ausgang für jedes Endgerät einzeln über ein adaptives Datenratenschema (ADR) verwalten.

Neben der Weiterleitung von Nachrichten zwischen Endgeräten und LoRa-Netzwerkservern wirkt die Vorrichtung 100 an der Bereitstellung von Zeitsynchronisationsmechanismen mit, indem sie in regelmäßigen, festen Abständen Beacons über die erste Schnittstelle 104 versendet. Alle Beacons werden im impliziten Radiopaketmodus übertragen, d.h. ohne einen physischen LoRa-Header und ohne CRC, der angehängt wird.

Figur 2 zeigt schematisch einen Aufbau der Vorrichtung 100. Neben den Schnittstellen 102, 106 und 110 umfasst die Vorrichtung 100 einen Prozessor 201 und einen Speicher 202, auf dem ein Computerprogramm 204 abgespeichert ist. Wird das Computerprogramm 204 auf dem Prozessor 200 ausgeführt, so werden die Verfahrensschritte dieser Beschreibung ausgeführt.

Figur 3 zeigt in schematischer Form einen detaillierten Aufbau der gebäudeseitig installierbare Vorrichtung 100. Das Weitverkehrsfunknetz 104 umfasst beispielsweise einen Rauchmelder R1 und einen Wasserzähler W1, welche der Vorrichtung 100 bzw. dem zugeordneten Gebäude zugeordnet sind. Weitergehend umfasst das Weitverkehrsfunknetz 104 einen Rauchmelder 2, einen Wasserzähler W2, und einen Heizkostenzähler H1, welche einer anderen Vorrichtung bzw. einem anderen Gebäude zugeordnet sind. Die vorgenannten Endgeräte des Weitverkehrsfunknetzes 104 senden ihre jeweiligen ersten Daten a bis e aus. Die ersten Daten a bis e werden mittels der ersten Schnittstelle 102 empfangen und in einem gesicherten Speicherbereich 302 der Vorrichtung 100 abgelegt. Der Speicherbereich 302 ist derart gesichert, dass ein Schreiben in den Speicherbereich 302 nur über die erste Schnittstelle 102 möglich ist. Ansonsten kann nur lesend auf den geschützten Speicherbereich 302 zugegriffen werden. Des Weiteren sind die ersten Daten a bis e verschlüsselt. Lediglich für eine Anzahl von Endgeräten, vorliegend für den Rauchmelder R1 und den Wasserzähler W1 sind in einem weiteren geschützten Speicherbereich 304 Schlüssel s1 und s2 abgelegt. Mittels der Schlüssel s1, s2 werden die verschlüsselten ersten Daten a, b entschlüsselt und als unverschlüsselte erste Daten A, B in einem weiteren Speicherbereich 306 bereitgestellt.

Über eine der Backhaul-Schnittstellen 110a und 110b werden die verschlüsselten ersten Daten a-e beispielsweise zu Abrechnungszwecken an eine zentrale Einheit 300 im Backhaul-Netzwerk 112 weitergeleitet. Die Backhaul-Schnittstelle 110a stellt beispielsweise eine drahtgebundene Schnittstelle zur Verbindung mit einem DSL- oder Glasfaser-Anschluss bereit. Die Backhaul-Schnittstelle 110b stellt eine drahtlose Schnittstelle für ein zellgestütztes Mobilfunknetzwerk bereit.

Die Vorrichtung 100 wird in einem Beispiel gemeinsam mit den Endgeräten gemäß dem Rauchmelder R1 und dem Wasserzähler W1 ausgeliefert, wobei die zu den jeweiligen Endgeräten passenden Schlüssel s1, s2 werkseitig in dem Speicherbereich 304 abgelegt werden.

Alternativ zu dem vorgenannten Beispiel kann ein Benutzer mit einem jeweiligen Endgerät E die Schlüssel anhand einer ablesbaren Kennung auf einem Schild des jeweiligen Endgeräts vom Hersteller bzw. dessen Internetseite herunterladen und auf die Vorrichtung 100 aufspielen, wobei eine weitere Schnittstelle 308 der Vorrichtung 100 verwendet wird. Die Schnittstelle 308 ist beispielsweise eine WLAN-Schnittstelle für ein WLAN-Netzwerk.

Die unverschlüsselten ersten Daten A, B können aus dem Speicherbereich 306 ausgelesen und aus auf dem Endgerät B dargestellt werden. So hat der Verwender stets eine Übersicht über die zugehörigen Verbrauchskosten. Gleichzeitig bleiben die verschlüsselten Daten gewollt unveränderbar in dem Speicherbereich 302 abgelegt bzw. zu Abrechnungszwecken auslesbar.

Über die zweite Schnittstelle 106 sind Endgeräte des Nahverkehrsfunknetzes 108 wie beispielsweise eine Lampe L1, ein Schalter S1 oder ein Ventil V1 einer Wasserleitung auslesbar bzw. ansteuerbar.

Eine dritte Funktion 310 verknüpft die ersten Daten A, B aus dem Weitverkehrsfunknetz 104 mit den empfangenen zweiten Daten D2 aus dem Nahverkehrsfunknetz 108 zu einem Überwachungsergebnis. Das Überwachungsergebnis 312 wird beispielsweise an das Endgerät E weitergeleitet vorliegend über die Schnittstelle 308. Selbstverständlich kann die Weiterleitung des Überwachungsergebnisses 312 auch über die Schnittstellen 110a bzw. 110 b geschehen. Weitergehend kann auch ein Aktor des Nahverkehrsfunknetzes 108 wie beispielsweise das Ventil V1 in Abhängigkeit von dem Überwachungsergebnis 312 mittels der dritten Daten D3 angesteuert werden.

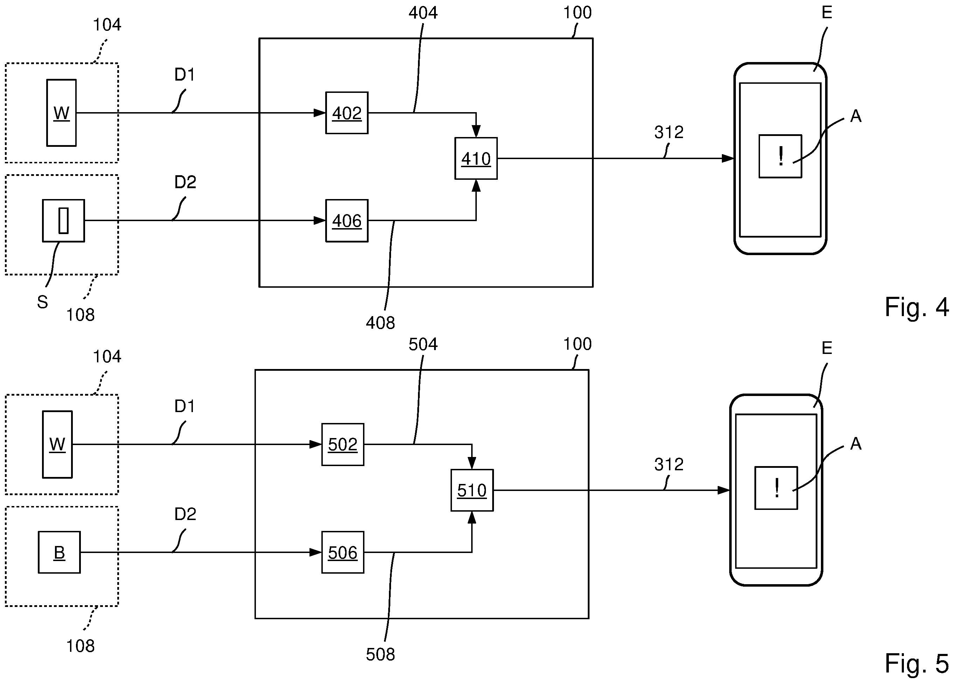

Figur 4 zeigt einen beispielhaften Anwendungsfall für die Vorrichtung 100. Ein erster Block 402 beobachtet erste Daten D1 eines Wasserzählers W. Ermittelt der Block 402 beispielsweise, dass der Wasserfluss über einen gewissen Zeitraum wie beispielsweise 30 Minuten konstant ist, so wird ein Signal 404 ausgegeben. Selbstverständlich können auch andere Bedingungen bei der Beobachtung der ersten Daten D1 des Wasserzählers W zur Anwendung kommen.

Ein Block 406 beobachtet die zweiten Daten D2 eines Lichtschalters S. Zusätzlich berücksichtigt der Block 408 die Sonnenuntergangs- und Sonnenaufgangszeiten. Stellt der Block 406 fest, dass während der Nacht - also zwischen Sonnenuntergang und Sonnenaufgang - der Lichtschalter S nicht zum Einschalten oder Ausschalten einer im Haus vorhandenen Beleuchtung verwendet wurde, so gibt dieser ein Signal 408 aus. Empfängt nun ein Block 410 zur gleichen Zeit die Signale 404 und 408 über einen Entprellungszeitraum von beispielsweise 15 Minuten hinweg, so gibt dieser das Überwachungsergebnis 312 aus, welches beispielsweise auf dem Endgerät E als Warnung A ausgegeben wird. In diesem Fall stellt die Warnung A die Meldung einer möglichen Leckage einer Wasserleitung dar. Die mittels des Endgeräts E benachrichtigte Person kann nun Gegenmaßnahmen einleiten, um einen Wasserschaden zu verhindern bzw. den Grund für den dauernden Wasserfluss herauszufinden. Zusätzlich kann in Abhängigkeit von dem ermittelten Überwachungsergebnis 312 ein Ventil, zum Beispiel das Ventil V1 aus Figur 3 geschlossen werden, um die mutmaßliche Leckage zu beenden.

Figur 5 zeigt ein weiteres Beispiel zur Anwendung der Vorrichtung 100. Wiederum kommt der Wasserzähler W aus dem Weitverkehrsfunknetz 104 zum Einsatz, dessen erste Daten D1 mittels eines Blocks 502 ausgewertet werden. Nimmt der Block 502 beispielsweise über einen Zeitraum von mehreren Stunden - beispielsweise 8 Stunden - keinen Wasserfluss wahr, so wird ein Signal 504 erzeugt.

Ein Bewegungsmelder B des Nahverkehrsfunknetzes 108 übermittelt zweite Daten D2 an einen Block 506. Stellt der Block 506 über einen Zeitraum von mehreren Stunden - beispielsweise 4 Stunden - keine Bewegung in einer Wohnung fest, so wird ein Signal 508 erzeugt. Ein Block 510 erzeugt das Überwachungsergebnis 312, welches im Sinne einer Warnung A auf dem Endgerät E angezeigt wird, wenn sowohl das Signal 504 als auch das Signal 508 und im Block 510 anliegen. Vorteilhaft kann somit eine Nicht-Aktivität innerhalb der Wohnung festgestellt werden. So kann beispielsweise mittels der Vorrichtung 100 ermittelt werden, ob der Bewohner beispielsweise gestürzt ist. Entsprechende Anwendungen ergeben sich in Altersheimen oder für Hausnotrufe. Das medizinische Personal kann entsprechend über die Warnung A informiert werden, um zu prüfen, ob Hilfe für den Bewohner der überwachten Wohnung erforderlich ist.

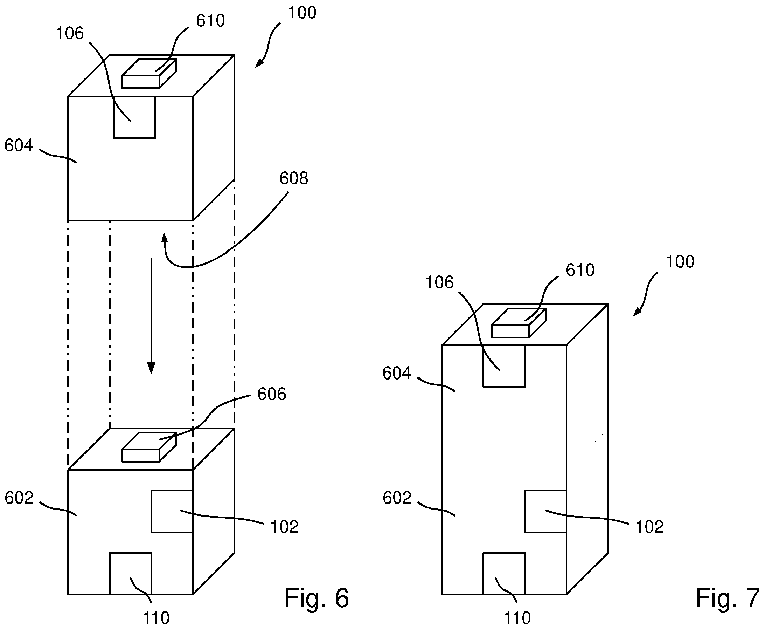

Figur 6 zeigt ein Beispiel der Vorrichtung 100. Ein erstes Modul 602 umfasst die erste Schnittstelle 102 und die Backhaul-Schnittstelle 110. Ein zweites Modul 604 umfasst die zweite Schnittstelle 106. Die Module 602 und 604 umfassen eine jeweilige Modulschnittstelle 606 und 608. Sind die Modulschnittstellen 606 und 608 verbunden, so bilden die Module 602 und 604 eine funktionale Einheit gemäß der Vorrichtung 100. Die Schnittstellen 606 und 608 sind so aufeinander abgestimmt, dass eine drahtgebundene elektrische Verbindung zwischen den Modulen 602 und 604 herstellbar ist und gleichzeitig die Module 602 und 604 mechanisch miteinander verbunden sind. In analoger Form stellt das zweite Modul 604 eine weitere Modulschnittstelle 610 bereit.

Gezeigt ist eine würfel-förmige Ausbildung der Hülle der jeweiligen Module 602 und 604. Selbstverständlich sind auch andere Ausführungen denkbar. So können die Module 602 und 604 auch zylinderförmig, hexagonförmig oder anders ausgebildet sein. Der Hintergrund für diese Modularisierung ist der, dass das Modul 604 je nach Ausbildung beispielsweise unterschiedliche Typen von zweiten Schnittstellen 106 bereitstellen kann. Der Verwender kann je nach gewünschtem Typ der zweiten Schnittstelle 106 ein entsprechendes Modul 604 zukaufen, um zusätzliche Funktionalitäten zu erhalten. Diese gehen über die Bereitstellung von Funkschnittstellen hinaus und können beispielsweise ein Anzeigemodul, ein Radiomodul, oder sonstige Entertainment-Module betreffen. Selbstverständlich können auf diese Art und Weise mehr als zwei Module miteinander verbunden werden.

Figur 7 zeigt die aufeinander gesteckten Module 602 und 604, welche auch visuell eine Einheit gemäß der Vorrichtung 100 bilden.

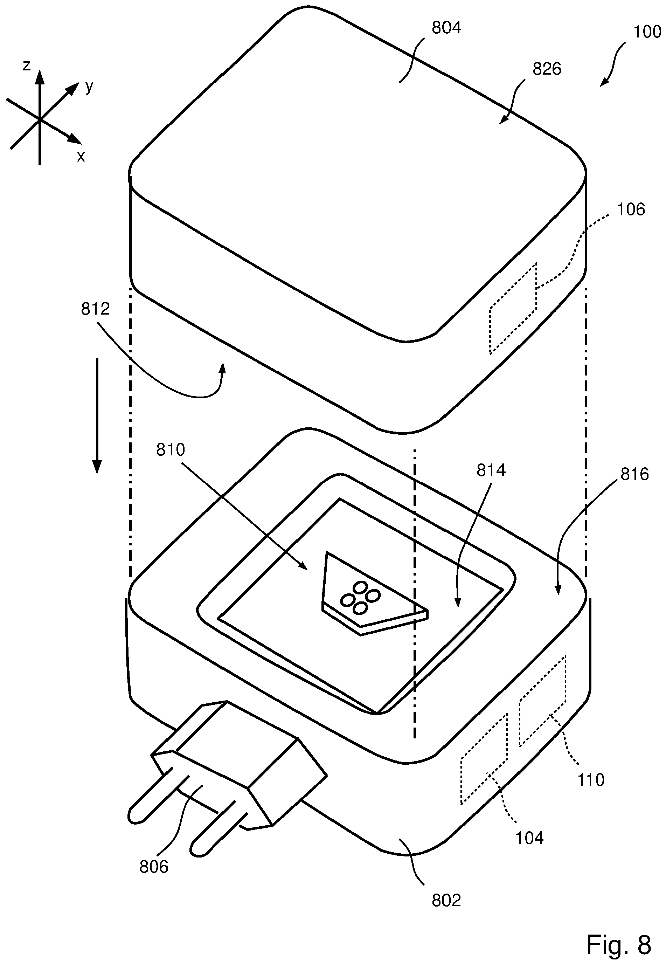

Figur 8 zeigt eine schematische perspektivische Sicht auf eine beispielhafte Vorrichtung 100. Die Vorrichtung 100 umfasst beispielhaft zwei Module 802 und 804. Das Modul 802 stellt ein Basismodul bereit und umfasst einen Niederspannungsstecker 806 gemäß EN 50075 zur Energieversorgung der Vorrichtung 100. Das Modul 802 umfasst die erste Schnittstelle 104 und die Backhaul-Schnittstelle 110.

Das Modul 802 umfasst eine Koppelschnittstelle 810, welche zur Stromversorgung und zur Kommunikation mit dem zweiten Modul 804 ausgebildet ist. Das zweite Modul 804 umfasst eine Koppelschnittstelle 812, welche dazu ausgebildet ist, um mechanisch und elektrisch mit der Koppelschnittstelle 810 verbunden zu werden. Die Koppelschnittstellen 810 und 812 umfassen eine Kodierung, sodass eine Kontaktierung nur in einer vorbestimmten Position der beiden Module 802 und 804 zueinander möglich ist. In einer alternativen, nicht gezeigten Ausführungsform sind die Koppelschnittstellen 810 und 812 als USB-Schnittstellen (USB: Universal Serial Bus) ausgebildet.

Die Koppelschnittstelle 810 befindet sich vorliegend in einer zurückspringenden Ausnehmung 814 an einer Oberseite 816 des Moduls 802. Die Oberseite 816 und die Funktion der zurückspringenden Ausnehmung 814 mit der darin angeordneten Koppelschnittstelle 810 ist damit selbsterklärend. So wird der Nutzer dazu aufgefordert, die Oberseite 810 vertikal nach oben ausgerichtet an der Steckdose anzuordnen. Darüber hinaus wird durch die Ausnehmung 814 an der Oberseite 816 für den Nutzer klargestellt, dass diese Ausnehmung 814 vertikal nach oben ausgerichtet sein soll. Entsprechend wird der Nutzer das Modul 802 an der Steckdose anbringen. Die Steckdose hält über den Niederspannungsstecker 806 das Gewicht der Vorrichtung 100.

Des Weiteren umfasst das Modul 802 eine nicht gezeigte Leistungselektronik, die dazu dient, die Schnittstellen 104 und 110 mit Strom zu versorgen. Darüber hinaus stellt die Leistungselektronik eine Stromversorgung des Moduls 804 über die Koppelschnittstelle 810 sowie die Stromversorgung der zugehörigen Kommunikationselektronik bereit.

Das Modul 804 umfasst die zweite Schnittstelle 106 für das Nahverkehrsfunknetz. Über die zweite Schnittstelle 106 sind damit Smart-Home-Geräte ansprechbar. Über das Modul 804 wird damit vorteilhaft eine für Smart Home-Geräte nutzbare Nachrüstlösung bereitgestellt. Selbstverständlich kann das Modul 804 an seiner Oberseite 826 wiederum eine Koppelschnittstelle analog zu der Koppelschnittstelle 810 umfassen. Auf diese Art und Weise können mehr als die zwei Module 802 und 804 miteinander verbunden werden.

Mit anderen Worten stellt das Modul 802 ein Basisgerät bereit, in welches ein LoRa-Gateway integriert ist, ggf. mit zusätzlichen Vernetzungsmöglichkeiten via LAN und Powerline. Des Weiteren umfasst das Modul 802 einen integrierten 230V-Stecker und ein integriertes Netzteil im Sinne der vorgenannten Leistungselektronik. Die Erweiterbarkeit des Moduls 802 wird durch das Modul 804 bereitgestellt. Das Modul 804 ist oben auf das Modul 802 aufsteckbar und umfasst die zweite Schnittstelle 106, über die Smart-Home-Protokolle wie ZigBee, ZWave usw. unterstützt werden. Mithin ergibt sich eine vorteilhafte Kombination von LoRa, 230V-Anschluss und Erweiterbarkeit in vertikaler Richtung.

## Patentansprüche

1. Eine gebäudeseitig installierbare Vorrichtung (100) zur Heim- und/oder Gebäudeautomatisierung, wobei die Vorrichtung (100) wenigstens einen Speicher (202) mit Computerprogrammcode (204), wenigstens einen Prozessor (200), wenigstens eine erste Schnittstelle (104) für ein Weitverkehrsfunknetz und eine wenigstens eine Backhaul-Schnittstelle (110) für ein Backhaul-Netzwerk umfasst, wobei der Computerprogrammcode (204) so konfiguriert ist, dass er mit dem wenigstens einen Prozessor (200), der wenigstens einen ersten Schnittstelle (104) und der wenigstens einen Backhaul-Schnittstelle (110) bewirkt, dass die Vorrichtung (100)
eine erste Funktion (114) bereitstellt, um mittels der ersten Schnittstelle (102) empfangene erste Daten (D1) über die wenigstens eine Backhaul-Schnittstelle (110) zu versenden.

2. Die Vorrichtung (100) gemäß dem Anspruch 1, wobei die Vorrichtung (100) mindestens eine zweite Schnittstelle (106) für ein Nahverkehrsfunknetz umfasst, wobei der Computerprogrammcode (204) so konfiguriert ist, dass er mit dem wenigstens einen Prozessor (200), der wenigstens einen ersten Schnittstelle (104), der wenigstens einen zweiten Schnittstelle (106) und der wenigstens einen Backhaul-Schnittstelle (110) bewirkt, dass die Vorrichtung (100)
eine zweite Funktion (116) bereitstellt, um mittels der wenigstens einen zweiten Schnittstelle (106) zweite Daten (D2) zu empfangen und dritte Daten (D3) in Abhängigkeit von den empfangenen zweiten Daten (D2) über die wenigstens eine zweite Schnittstelle (106) zu versenden.

3. Die Vorrichtung (100) gemäß Anspruch 1 oder 2, wobei die Vorrichtung (100)
eine dritte Funktion (310) bereitstellt, um ein Überwachungsergebnis (312) in Abhängigkeit von den ersten über die erste Schnittstelle (102) empfangenen Daten (D1) und in Abhängigkeit von den zweiten mittels der zweiten Schnittstelle (106) empfangenen Daten (D2) zu ermitteln.

4. Die Vorrichtung (100) gemäß einem der vorigen Ansprüche, wobei die Vorrichtung (100)
die ersten Daten (D1; a-e) in verschlüsselter Form mittels der wenigstens einen ersten Schnittstelle (102) empfängt,
die verschlüsselten Daten (D1; a-e) in einem ersten Speicherbereich (302) bereitstellt, wobei die Zugriffsrechte auf den ersten Speicherbereich (302) so ausgestaltet sind, dass der erste Speicherbereich (302) nur ausgehend von der ersten Schnittstelle (102) beschreibbar ist,
wenigstens einen Teil der Mehrzahl der bereitgestellten ersten Daten (D1; a, b) in Abhängigkeit von einem zugeordneten in einem zweiten Speicherbereich (304) hinterlegten Schlüssel (s1, s2) entschlüsselt und in einem dritten Speicherbereich (306) bereitstellt.

5. Die Vorrichtung (100) gemäß dem Anspruch 3 oder 4, wobei die Vorrichtung (100)
das Überwachungsergebnis (312) mittels der Backhaul-Schnittstelle (110) und/oder einer weiteren Schnittstelle (308) für ein Nahverkehrsfunknetz versendet.

6. Die Vorrichtung (100) gemäß einem der vorstehenden Ansprüche, wobei die Vorrichtung (100) eine Anzahl von miteinander verbindbaren Modulen (602, 604) umfasst, wobei ein erstes der Module (602) die wenigstens eine erste Schnittstelle (102) und die wenigstens eine Backhaul-Schnittstelle (110) umfasst, und wobei ein zweites der Module (604) die wenigstens eine zweite Schnittstelle (106) umfasst.

7. Die Vorrichtung (100) gemäß einem der vorstehenden Ansprüche, wobei die Vorrichtung (100) eine Anzahl von miteinander verbindbaren Modulen umfasst, wobei ein erstes der Module die wenigstens eine zweite Schnittstelle (106) und die wenigstens eine Backhaul-Schnittstelle (110) umfasst, und wobei ein zweites der Module die wenigstens eine erste Schnittstelle (102) umfasst.

8. Die Vorrichtung (100) gemäß dem Anspruch 5 oder 6, wobei das erste der Module (602) eine erste Modulschnittstelle (606) aufweist, welche mit einer zweiten Modulschnittstelle (608) des zweiten der Module (604) mechanisch und elektrisch verbindbar ist.

9. Die Vorrichtung (100) gemäß einem der vorigen Ansprüche, wobei das Weitverkehrsfunknetz ein Netzwerk gemäß dem LoRaWAN-Standard ist, und wobei die erste Schnittstelle (102) eine LoRaWAN-Schnittstelle ist.

10. Die Vorrichtung (100) gemäß einem der vorigen Ansprüche, wobei das Nahverkehrsfunknetz ein Netzwerk gemäß dem ZigBee-Standard oder gemäß dem EnOcean-Standard oder gemäß dem Z-Wave-Standard ist, und wobei die zweite Schnittstelle eine ZigBee-Schnittstelle oder eine EnOcean-Schnittstelle oder eine Z-Wave-Schnittstelle ist.

11. Die Vorrichtung (100) gemäß einem der Ansprüche 1 bis 6 sowie 9 und 10, wobei die Vorrichtung (100) wenigstens ein erstes Modul (802) mit der ersten Schnittstelle (104) und der Backhaul-Schnittstelle (110) umfasst.

12. Die Vorrichtung (100) gemäß dem Anspruch 11, wobei die Vorrichtung (100) wenigstens ein zweites Modul (804) mit einer bzw. der zweiten Schnittstelle (106) umfasst.

13. Die Vorrichtung (100) gemäß den Ansprüchen 11 und 12, wobei das erste und das zweite Modul (802, 804) mittels jeweiliger Koppelschnittstellen (810, 812) lösbar miteinander verbindbar sind.

14. Die Vorrichtung (100) gemäß dem Anspruch 13, wobei die jeweilige Koppelschnittstelle (810; 812) in ein jeweiliges Gehäuse des ersten bzw. zweiten Moduls (810, 812) integriert ist.

15. Die Vorrichtung (100) gemäß einem der Ansprüche 11 bis 14, wobei das erste Modul (802) einen Niederspannungsstecker (806) zur Energieversorgung der Vorrichtung (100) umfasst.

16. Die Vorrichtung (100) gemäß dem Anspruch 15, wobei der Niederspannungsstecker (806) in ein Gehäuse des ersten Moduls (802) integriert ist.

17. Ein Verfahren zum Betreiben gebäudeseitig installierbare Vorrichtung (100) zur Heim- und/oder Gebäudeautomatisierung, wobei das Verfahren umfasst:
Bereitstellen einer ersten Funktion (114), um mittels wenigstens einer ersten Schnittstelle (102) empfangene erste Daten (D1) über wenigstens eine Backhaul-Schnittstelle (110) zu versenden.
